# FASCICULE DE BREVET EUROPEEN

(11) **EP 2 305 960 B1**
(45) Date de publication et mention de la délivrance du brevet: **31.07.2013**
(21) Numéro de dépôt: 09175028.1
(22) Date de dépôt: 04.11.2009
(51) Int. Cl.: F01D 17/10, F01D 11/12, F02C 9/18, F04D 27/02, F16K 24/06

(54) **Valve de purge dans le canal primaire du compresseur et procédé correspondant de suppression de phénomène de pompage**
Verdichterablassventil vom primären Kanal und entsprechendes Verfahren zur Vermeidung des Pumpvorgangs
Purging valve in a primary duct of a compressor and corresponding process to suppress the surge effect

(30) Priorité: 28.09.2009 EP 09171509
(43) Date de publication de la demande: 06.04.2011
(73) Titulaire: Techspace Aero S.A., 4041 Herstal (Milmort) (BE)
(72) Inventeur: Vallino, Frédéric, 4100 Seraing (BE)
(74) Mandataire: Lecomte, Didier

(56) Documents cités:
- EP-A1- 1 544 524
- EP-A2- 1 832 755
- CA-A1- 2 199 875
- DE-U1- 20 114 702
- FR-A- 1 012 339
- FR-A1- 2 916 475
- US-A- 4 540 335

## Description

### Domaine technique

L'invention a trait à un dispositif de fuite pour une turbomachine, plus particulièrement pour un compresseur de turbomachine axiale, plus particulièrement encore pour un compresseur basse-pression axial, le dispositif de fuite ayant pour objectif de réduire, éliminer ou contrôler le phénomène de pompage qui peut survenir au niveau de l'écoulement dans la machine à certains régimes de fonctionnement. L'invention a trait également à une paroi équipé d'au moins un dudit dispositif de fuite, à un compresseur équipée de ladite paroi ainsi qu'à un procédé de diminution et de suppression d'un phénomène de pompage dans un compresseur axial.

Le pompage est un phénomène fondamental propre aux compresseurs dynamiques. Ces derniers sont caractérisés par le fait que la compression est obtenue par échange d'énergie dans le fluide mis en mouvement dans des rangées d'aubes. Les compresseurs axiaux et centrifuges appartiennent à cette catégorie de turbomachines. Similairement au phénomène de décrochage d'une aile d'avion qui perd alors sa portance, l'écoulement de fluide au travers du compresseur peut décrocher, ce qui empêche de « pousser » le fluide. En effet, le compresseur étant connecté à deux réseaux à pressions différentes, la capacité à haute pression du refoulement se vide dans la capacité à basse pression de l'aspiration par un débit à contre courant dans le compresseur. Le pompage est cette instabilité aérodynamique d'ensemble du compresseur dans son environnement, lors du fonctionnement principalement à petit débit. Lorsque le réseau de refoulement s'est suffisamment vidé dans l'aspiration, le compresseur trouve de nouvelles conditions de fonctionnement lui permettant de rétablir le débit dans la bonne direction, jusqu'à ce qu'un nouveau cycle d'instabilité recommence. Ces grandes fluctuations de débit portent le nom de pompage, en raison de la nature de ce phénomène en oscillations de relaxation. L'inversion soudaine du débit s'apparente à un choc et ses conséquences mécaniques peuvent s'avérer désastreuses, comme, par exemple, des ruptures d'aubes sur les compresseurs axiaux.

Des moyens spécifiques de protection doivent être installés sur les machines pour préserver leur intégrité et conserver leurs performances dans le temps. Ces moyens sont d'autant plus complexes que l'on souhaite toujours la plus grande plage possible en débit pour le fonctionnement de la machine afin d'adapter de façon permanente, économique et souple, la puissance tout en maintenant une consommation la plus faible possible.

### Technique antérieure

De nombreux moyens de protection contre le pompage ont été développés par le passé. La plupart d'entre eux consistent à générer une fuite contrôlée au niveau de la paroi de carter du compresseur au niveau de l'extrémité d'une rangée d'aubes rotoriques.

Le document de brevet US 801,771 divulgue un pareil dispositif consistant essentiellement en une série de bouchons mobiles disposés sur le périmètre du carter du compresseur d'une turbomachine axiale, en face de trous pratiqués dans le carter. Les bouchons mobiles sont reliés de manière étanche avec une membrane souple dont la face arrière forme avec un élément de paroi rapporté une chambre de commande des bouchons. La face avant de la membrane forme une chambre de fuite commune aux différents bouchons et en liaison avec une vanne permettant de connecter la fuite à l'atmosphère ou à un diffuseur en aval du compresseur. Ce dispositif présente l'avantage de pouvoir être contrôlé mais cette mesure a pour conséquence d'exiger un dispositif de contrôle performant, ce qui augmente la complexité et le coût du dispositif. De plus, la construction même des bouchons mobiles servant de vanne de fuite est assez complexe et requiert beaucoup de soin tant au niveau précision d'exécution qu'au niveau maintenance (remplacement des membranes, vérification du bon coulissement des bouchons dans leurs guides, etc.).

Le document de brevet GB 1,357,016 divulgue un dispositif de fuite contrôlée selon un principe général similaire à celui du document précédent, à savoir que des trous ou orifices pratiqués dans la paroi du carter du compresseur d'un turbomachine axiale sont obturés ou laissés libres par l'application d'une membrane mise sous pression par raccordement au compresseur. La membrane est déplacée au moyen d'une paroi cylindrique entourant le carter cylindrique du compresseur au droit des orifices. La membrane est fixée à cette paroi cylindrique si bien que le déplacement de cette paroi parallèlement à la paroi du carter va déplacer la membrane par un roulement sur elle-même, permettant l'ouverture ou l'obturation des orifices. Tout comme pour l'enseignement du document précédent, ce dispositif présente l'avantage de pouvoir contrôler la fuite mais impose des moyens de commande complexes et coûteux.

Le document de brevet GB 2 158 879 A divulgue un dispositif de fuite actif, c'est-à-dire contrôlé. II consiste essentiellement en une vanne mise sur un circuit de décharge à proximité d'une conduite reliant un orifice pratiqué dans le carter d'un compresseur de turbomachine axiale au circuit de décharge. La vanne est commandée par un actuateur qui est lui-même commandé. Tout comme pour l'enseignement des documents précédents, ce dispositif présente l'avantage de pouvoir contrôler la fuite mais impose des moyens de commande complexes et coûteux.

Les dispositifs de fuite actifs tels que ceux décrits ci-avant consistent généralement à ponctionner un débit d'air variable suivant un programme défini. Un ensemble de réglages doit alors être défini et contrôlé par le FADEC (acronyme anglais de Full Authority Digital Engine Control qui désigne un régulateur numérique de moteur à pleine autorité pour moteur d'aéronef). Le FADEC est un système reposant sur un calculateur et des périphériques de commande et de contrôle s'interfaçant entre le cockpit et le moteur d'aéronef. Ces réglages étant prédéfinis, le fonctionnement n'est pas optimal, en particulier lors des transitoires.

Le document de brevet EP1 898 067 A2 divulgue un dispositif de fuite passif pour un compresseur de turboréacteur. Le dispositif crée une fuite permanente avec une recirculation vers l'amont, ce qui implique des pertes et une utilisation non-optimale du compresseur. L'exigence de régulation du pompage amène alors à une dégradation permanente des performances du compresseur, en raison de la présence d'une fuite même en l'absence de tout phénomène pénalisant. Le document de brevet FR 2 916 475 A1 divulgue un dispositif de fuite conforme au préambule de la revendication 1. Le document de brevet FR 1 012 339 A divulgue également un dispositif de fuite d'une turbomachine, le dispositif étant à lumières et actionné en rotation. Le document de brevet EP 1 544 524 A1 divulgue un obturateur de vanne comprenant une plaque en matériau à mémoire de forme pourvue d'une matrice de pores formés par des entailles dans la plaque.

L'invention a pour objet de proposer un dispositif de fuite pour turbomachines, plus particulièrement pour compresseurs axiaux, destiné à limiter et/ou arrêter un phénomène de pompage, palliant au moins un des inconvénients sus mentionnés.

### Résumé de l'invention

L'invention consiste en un dispositif de fuite vers un canal de fuite pour une paroi délimitant une veine fluide en mouvement dans une turbomachine, comprenant un insert creux destiné à être disposé au travers de la paroi, l'insert comprenant une membrane dont la surface extérieure délimite la veine fluide et la surface intérieure est en contact avec le canal de fuite, la membrane comportant au moins une entaille ; la membrane étant d'un matériau et d'une géométrie tels qu'elle est apte à se déformer aux abords de l'entaille en présence d'une différence de pression entre ses surfaces extérieure et intérieure. Un tel dispositif de fuite est très simple à réaliser, à mettre en oeuvre et à entretenir. De plus, il est permet de créer une fuite calibrée et intermittente, c'est-à-dire qui n'a lieu que lorsque celle-ci est nécessaire, en des points précis de la turbomachine.

Selon un mode avantageux de l'invention, la membrane est du même matériau que l'insert et unitaire avec ce dernier. Ce mode de réalisation est le plus simple et le plus économique.

Selon un autre mode avantageux de l'invention, la membrane comporte deux entailles en forme de croix, les deux entailles étant préférentiellement perpendiculaires. Diverses formes d'entailles sont envisageables. La forme sus mentionnée est simple et rapide à réaliser et permet une courbe caractéristique débit-pression intéressante et ce en dépit d'une rigidité intrinsèquement élevée du matériau de la membrane.

Selon un encore autre mode avantageux de l'invention, l'insert est généralement cylindrique avec un axe longitudinal et la membrane est disposée à une extrémité de la partie cylindrique, généralement perpendiculairement à son axe longitudinal et de manière étanche par rapport à la partie cylindrique. Ce mode de réalisation est le plus simple et le plus économique.

Selon un encore autre mode avantageux de l'invention, l'insert comprend une collerette à l'extrémité de sa partie cylindrique qui est opposée à celle comportant la membrane. La collerette présente une surface de contact importante avec la surface de la paroi et, partant, permet une fixation efficace, par exemple par collage.

Selon un encore autre mode avantageux de l'invention, le matériau de la membrane est un alliage à mémoire de forme ou un polymère. Les alliages à mémoire de forme présentent les avantages usuels des matériaux métalliques pour ce genre de réalisation et, en plus, une super élasticité pouvant atteindre 10% (c'est-à-dire sans déformation permanente).

L'invention consiste également en une paroi de turbomachine, délimitant une veine fluide en mouvement, équipée d'au moins un dispositif de fuite vers un canal de fuite, et où le dispositif de fuite est tel que décrit ci-avant.

Selon un mode avantageux de l'invention, le dispositif de fuite est disposé de manière à ce que la surface extérieure de la membrane affleure la surface adjacente de la paroi, la surface adjacente de la paroi étant préférentiellement garnie d'une couche de matériau abradable. Un perçage est réalisé dans la paroi et la couche d'abradable alors que, une fois l'insert mis en place dans le perçage, la surface extérieure de la membrane affleure la surface de la paroi et non celle de la couche d'abradable car cette dernière est destinée être potentiellement érodée par la rotation des aubes rotoriques.

Selon un autre mode avantageux de l'invention, le dispositif de fuite est disposé de manière à ce que son axe longitudinal soit approximativement perpendiculaire à la paroi.

Selon un encore autre mode avantageux de l'invention, la paroi comprend une série de dispositifs de fuite répartis sur une ou plusieurs circonférences de la paroi.

Selon un encore autre mode avantageux de l'invention, la paroi est une paroi statorique d'un compresseur, délimitant l'enveloppe extérieure de la veine fluide accélérée par une rangée d'aubes rotoriques du compresseur, le ou les dispositifs de fuite étant disposés avantageusement par rapport aux extrémités de la rangée d'aubes rotoriques.

Selon un encore autre mode avantageux de l'invention, la paroi est une virole interne d'une rangée d'aubes statoriques d'un compresseur, formant un étage redresseur. II peut en effet être intéressant de prévoir un dispositif de fuite au niveau de l'enveloppe intérieure de la veine fluide du compresseur. Dans ce cas, il indiqué de prévoir les inserts au niveau de la virole interne avec la surface extérieure de la membrane affleurant la surface extérieure de la virole.

L'invention consiste également en un compresseur multi-étages de turbomachine double flux, comprenant une première paroi délimitant l'enveloppe extérieure de la veine fluide du flux primaire traversant le compresseur et une seconde paroi délimitant l'enveloppe intérieure de la veine fluide du flux secondaire et formant avec la première paroi un bec de séparation des flux primaire et secondaire, le bec de séparation étant équipé d'au moins un dispositif de fuite pour la première paroi, la fuite étant destinée à limiter et/ou arrêter un phénomène de pompage, et où la première paroi est telle que décrite ci-avant et comprend plusieurs dispositifs de fuite disposés au niveau de plusieurs étages de compression, le bec de séparation formant une chambre de communication des dispositifs de fuite disposés sur la première paroi. Cette chambre de communication permet des recirculations programmées de l'air au moyen de différents fuites calibrées entre elles et, partant, un meilleur équilibre des pressions dans le compresseur.

Selon un mode avantageux de l'invention, la seconde paroi est équipée d'au moins un insert tel que décrit ci-avant, de manière à compenser la pression régnant dans la chambre de communication des dispositifs de fuite disposés sur la première paroi. Cette mesure permet un réglage de la pression dans la chambre de communication et, partant, une optimisation du fonctionnement des inserts positionnés répartis sur le carter du compresseur.

L'invention consiste également en un procédé de diminution et de suppression d'un phénomène de pompage dans un compresseur axial de turbomachine à double flux avec une première paroi délimitant l'enveloppe extérieure de la veine fluide du flux primaire traversant le compresseur et une seconde paroi délimitant l'enveloppe intérieure de la veine fluide du flux secondaire et formant avec la première paroi un bec de séparation des flux primaire et secondaire, le procédé comprenant l'étape consistant à disposer au moins un dispositif de fuite au niveau de la première paroi, le ou les dispositifs de fuite étant tels que décrits ci-avant ; et comprenant l'étape de prévoir au moins un dispositif de fuite tel que décrit ci-avant au travers de la seconde paroi de manière à utiliser le bec de séparation comme chambre de communication et de compensation pour les dispositifs de fuite de la première paroi.

### Brève description des dessins

La figure 1 est une vue en coupe d'un dispositif de fuite selon l'invention.

La figure 2 est une vue du dessus d'un dispositif de fuite selon l'invention.

La figure 3 est une vue du dessous d'un dispositif de fuite selon l'invention.

La figure 4 est une vue en coupe d'une paroi de compresseur axial comportant un dispositif de fuite selon l'invention.

La figure 5 est une vue schématique d'un turboréacteur équipé d'un compresseur basse-pression muni d'au moins un dispositif de fuite selon l'invention. Le détail D2 illustre le bec de séparation entre le flux primaire et le flux secondaire du turboréacteur et comprenant deux parois équipées de plusieurs dispositifs de fuite selon l'invention.

### Description des modes de réalisation

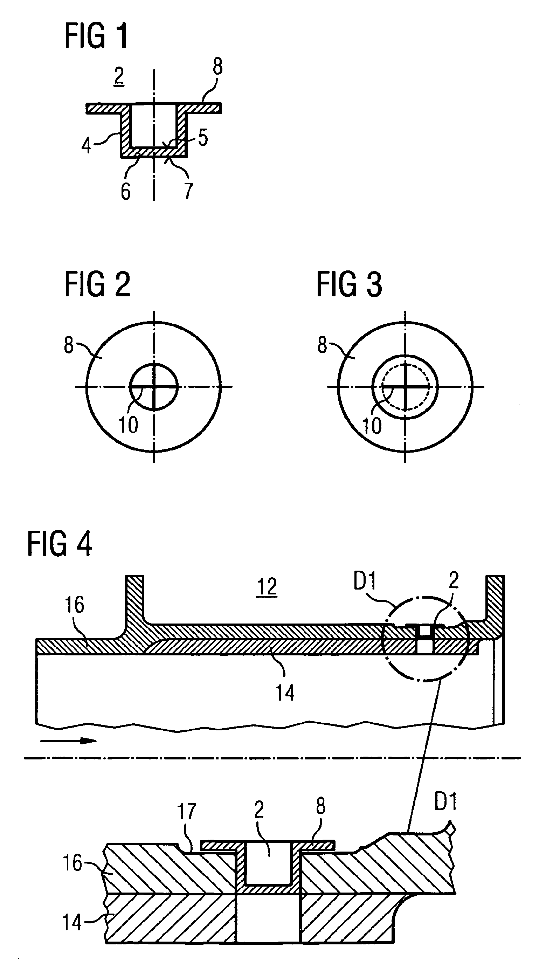

Le dispositif de fuite consiste en un insert 2 tel qu'illustré en coupe à la figure 1. L'insert comprend essentiellement une partie cylindrique creuse 4, un fond ou membrane 6 fermant la partie cylindrique à une extrémité, et une collerette à l'autre extrémité de la partie cylindrique. La membrane 6 présente une surface extérieure 7 et une surface intérieure 5 située dans le creux de l'insert.

Le mot membrane est utilisé dans cette description par analogie à une membrane élastique sachant que l'élasticité de la membrane décrite restera minime mais bien réelle, à la manière d'une vraie membrane faiblement élastique. Ce mot a été préféré au mot « paroi » afin d'éviter toute confusion avec la paroi délimitant la veine fluide destinée à recevoir l'insert. II est cependant à interpréter de manière similaire au mot « paroi » avec, toutefois, des propriétés particulières de flexibilité.

Une vue du dessus de l'insert est illustrée à la figure 2 et une vue du dessous est illustrée à la figure 3. La membrane 6 présente deux entailles 10 en forme de croix. Ces deux entailles sont pratiquées sur toute l'épaisseur de la membrane 6. Cette dernière est faite du même matériau que la partie cylindrique 4 ainsi que la collerette 8. Elle est également unitaire avec la partie cylindrique 4 et la collerette 8, c'est-à-dire que ces trois parties de l'insert sont fabriquées par mise à forme de la même pièce.

L'objectif des deux entailles 10 est de permettre un passage de fuite lorsque la différence de pression entre les deux surfaces 5 et 7 de la membrane dépasse une certaine valeur, tout en assurant une étanchéité ou quasi étanchéité lorsque cette différence de pression n'est pas atteinte. En pratique, l'insert 2 est fabriqué d'un seul tenant d'un matériau choisi comme par exemple un polymère ou un matériau ou alliage à mémoire de forme (AMF). Les alliages à mémoire de forme sont des alliages possédant plusieurs propriétés inédites parmi les matériaux métalliques : la capacité de "garder en mémoire" une forme initiale et d'y retourner même après une déformation, la possibilité d'alterner entre deux formes préalablement mémorisées lorsque sa température varie autour d'une température critique, et un comportement super élastique permettant des allongements sans déformation permanente supérieurs à ceux des autres métaux (jusqu'à 10%). Parmi les principaux alliages à mémoire de forme, on retrouve toute une variété d'alliages de nickel et de titane comme constituants principaux, en proportions presque égales, comme par exemple le nitinol.

[0035] L'insert peut comprendre une seule entaille, deux ou plus encore en fonction des caractéristiques de travail recherchées. La réalisation de deux entailles croisées à 90° des figures 2 et 3 est purement exemplative. En effet, on pourrait réaliser une simple entaille droite, ce qui rendrait la courbe caractéristique débit-pression plus plate (lorsque l'axe de abscisses est la pression et l'axe des ordonnées est le débit). A l'inverse, on pourrait réaliser une série d'entailles croisées, par exemple 4 entailles se croisant en leurs centres et réparties uniformément avec un angle de 45° entre deux entailles voisines. Dans ce cas, la courbe débit-pression serait plus pentue, exprimant par là un plus grande variabilité du débit avec la pression lorsque cette dernière a dépassé le seuil critique d'ouverture de l'insert.

[0036] Les inserts sont conçus pour s'ouvrir lorsque la différence de pression entre la surface intérieure 5 et la surface extérieure 7 de la membrane 6 dépasse un certain seuil. Ce seuil sera déterminé en fonction de l'application, c'est-à-dire en fonction de la machine à laquelle les inserts doivent être appliqués et, plus particulièrement, en fonction de l'emplacement des inserts. En effet, la pression régnant dans le compresseur augmente progressivement depuis le premier étage de compression jusqu'au dernier. Les inserts s'ouvrent typiquement pour une différence de pression allant de 0.25 à 5, plus particulièrement de 0.5 à 3 bars pour les compresseurs basse-pression. Les inserts peuvent également être utilisés pour des compresseurs haute-pression, dans ce cas, au vu des contraintes de pression et de température, il peut être nécessaire de considérer d'autres matériaux aptes à assurer une ouverture à une différence de pression supérieure à 3 bars dans des conditions de température plus sévères.

Une paroi de carter de compresseur équipée d'un insert de fuite tel que décrit ci-avant est illustrée à la figure 4. Il s'agit d'une vue en coupe d'une paroi 12 formant un partie de carter en forme de virole correspondant à un étage de compression. La paroi 12 comprend un voile 16 équipée de nervures de renfort et dont la surface intérieure délimite la veine fluide déplacée axialement par le rotor (non représenté). Le voile est profilé de sorte à ce que sa surface intérieure présente une augmentation de diamètre au droit d'une rangée d'aubes rotoriques (non représentées à cette figure), de manière à pouvoir recevoir une couche 14 de matériau abrabable destinée à coopérer avec les extrémités d'aubes rotoriques. Une série d'inserts 2 sont disposés au travers du voile 16 le long de sa circonférence et à proximité du bord de la couche de matériau abradable, ce bord correspondant au bord de fuite des aubes rotoriques (l'écoulement de fluide est illustré par la flèche). La zone du carter 12 entouré d'un cercle référencé D1 est illustrée plus en détail en dessous de l'illustration principale de la figure 4. On observe que l'insert est disposé par insertion dans un perçage pratiqué au travers du voile 16 et de l'abradable 14. La hauteur de l'insert est telle que la surface extérieure 7 de sa membrane ou fond 6 affleure la surface intérieure du voile 16 de manière à rester préservée en cas d'usure de la couche d'abradable 14. Un lamage 17 est pratiqué au niveau de la surface extérieure du voile 16, centré avec le perçage de manière à permettre d'y noyer la collerette 8 de l'insert 2.

Le nombre et la répartition des inserts le long de la circonférence du carter vont dépendre de différents paramètres comme par exemple le débit de fuite recherchée ainsi que les caractéristiques des inserts, et pourront être aisément déterminés par l'homme de métier.

Les inserts sont typiquement insérés dans les perçages pratiqués dans le carter avec un léger serrage et maintenus par exemple par application d'une colle, en particulier entre la collerette 8 et le lamage 17. Le serrage éventuel et le choix de la colle dépendront de différents paramètres comme la résistance mécanique voulue, les conditions de température et la possibilité de démontage dans le cadre de procédures d'entretien et pourront être déterminés aisément par l'homme de métier.

La hauteur des inserts 2 correspond approximativement à l'épaisseur du voile 16. Ce dernier présente habituellement une épaisseur de l'ordre de quelques millimètres, typiquement de l'ordre de 3 mm. Le diamètre extérieur des inserts 2 dépend de différents paramètres. Dans le cas des figures 1 à 4, le diamètre extérieur est typiquement de l'ordre de 4 mm et l'épaisseur de la membrane 6 est de l'ordre de 0.5 mm.

En cas de commencement de phénomène de pompage au niveau d'une rangée d'aubes rotoriques, l'écoulement pulsé qui en résulte génére des pics de pression qui vont ouvrir les inserts disposés le long de la circonférence du carter en regard des extrémités d'aubes en question. Les fuites générées par ces inserts vont diminuer voire annuler la nature pulsée de l'écoulement et lui permettre de reprendre un régime plus ou moins constant. Les inserts sont typiquement en liaison avec l'atmosphère de sorte que le débit de fuite qu'ils peuvent créer va se faire à une pression correspondant à la pression atmosphérique multipliée par le rapport de pression auquel les inserts s'ouvrent.

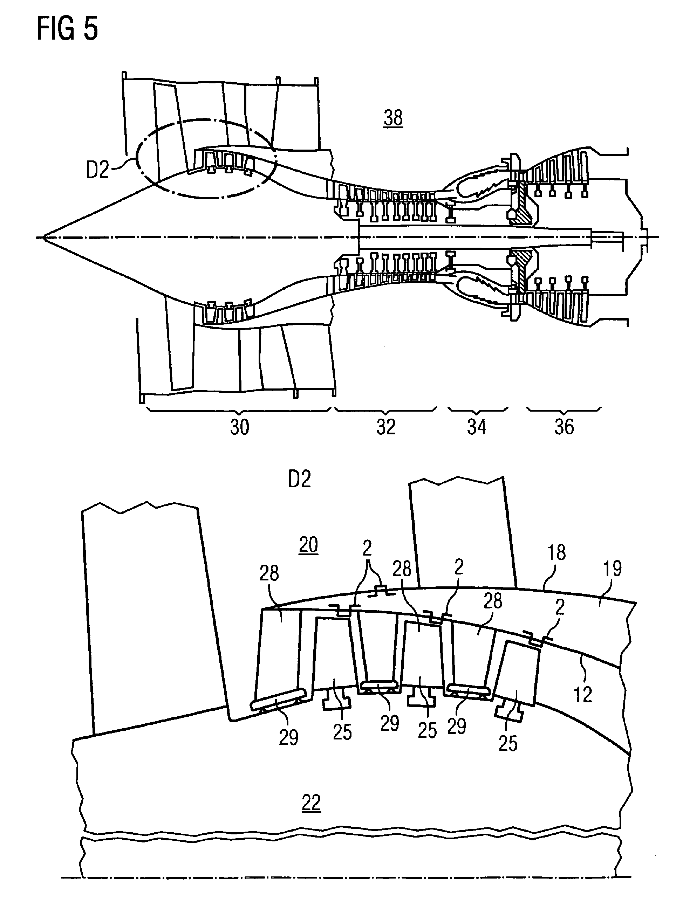

Un design particulier peut être appliqué à un turboréacteur double flux 38 tel qu'illustré à la figure 5. Ce dernier comprend typiquement, d'amont en aval, un compresseur basse-pression 30, une compresseur haute-pression 32, une chambre de combustion 34 et une turbine 36. Le détail D2 illustre de manière simplifiée une partie du compresseur basse-pression 30 comprenant un bec de séparation 20 entre le flux primaire qui va traverser le compresseur et le flux secondaire qui va le contourner, ces deux flux étant illustrés par une double flèche. Les aubes mobiles ou rotoriques 25 sont montées sur le rotor 22 et les aubes fixes ou statoriques sont montées sur le carter. Le bec de séparation 20 comprend une partie du carter 12 du compresseur basse-pression, délimitant l'enveloppe extérieure du flux primaire et une paroi 18 délimitant l'enveloppe intérieure du flux secondaire. Le bec de séparation 20 avec ces deux parois définit une chambre 19 dite chambre de pression de référence. II est à noter que cette chambre est séparée du volume correspondant (entre le flux primaire et le flux secondaire) du compresseur haute-pression. La paroi du carter 12 comprend une série d'inserts 2 répartis sur plusieurs circonférences du carter 12 au niveau de différents étages rotoriques. La paroi extérieure 18 du bec de séparation 20 comprend également un ou plusieurs inserts 2 de manière à permettre une fuite entre la chambre 19 et le flux secondaire.

En fonctionnement, les inserts de fuites 2 disposés au niveau de différents étages de compression (et de caractéristiques spécifiques) autorisent des fuites calibrées et intermittentes, et ce uniquement lorsque celles-ci sont nécessaires en des points précis du compresseur. Le fait que ces inserts communiquent entre eux via la chambre 19 permet également des recirculations programmées de l'air et, partant, d'atteindre un meilleur équilibre des pressions dans le compresseur. La présence d'un ou plusieurs inserts entre la chambre 19 et le flux secondaire permet d'équilibrer la pression de la chambre 19 avec le flux secondaire. Cela permet de corréler le seuil d'ouverture des inserts de fuite 2 du compresseur à la pression régnant dans le flux secondaire.

II est à noter que les inserts décrits ci-avant peuvent également être disposés au travers d'une paroi délimitant l'enveloppe intérieure de la veine fluide d'un compresseur, comme par exemple le rotor 22 ou une virole interne 29 d'un étage redresseur 28 tels qu'illustré au détail D2 de la figure 5.

## Revendications

1. Dispositif de fuite vers un canal de fuite pour une paroi (12) délimitant une veine fluide en mouvement dans une turbo-machine,
comprenant
un insert (2) destiné à être disposé au travers de la paroi (12), l'insert comprenant une membrane (6) ;
**caractérisé en ce que**
l'insert (2) est creux, la surface extérieure (7) de la membrane (6) délimite la veine fluide et la surface intérieure (5) de la membrane (6) est en communication avec le canal de fuite, la membrane (6) comportant au moins une entaille(10) ; la membrane (6) étant d'un matériau et d'une géométrie tels qu'elle est apte à se déformer aux abords de l'entaille (10) en présence d'une différence de pression entre ses surface extérieure (7) et intérieure (5).

2. Dispositif de fuite selon la revendication précédente, **caractérisé en ce que** la membrane (6) est du même matériau que l'insert (2) et unitaire avec l'insert (2).

3. Dispositif de fuite selon l'une des revendications précédentes, **caractérisé en ce que** la membrane comporte deux entailles (10) en forme de croix, les deux entailles étant préférentiellement perpendiculaires.

4. Dispositif de fuite selon l'une des revendications précédentes, **caractérisé en ce que** l'insert (2) est généralement cylindrique avec un axe longitudinal et la membrane (6) est disposée à une extrémité de la partie cylindrique (4), généralement perpendiculairement à son axe longitudinal et de manière étanche par rapport à la partie cylindrique (4).

5. Dispositif de fuite selon la revendication précédente, **caractérisé en ce que** l'insert (2) comprend une collerette (8) à l'extrémité de sa partie cylindrique (4) qui est opposée à celle comportant la membrane (6).

6. Dispositif de fuite selon l'une des revendications précédentes, **caractérisé en ce que** le matériau de la membrane (6) est un alliage à mémoire de forme ou un polymère.

7. Paroi (12) de turbomachine, délimitant une veine fluide en mouvement, équipée d'au moins un dispositif de fuite vers un canal de fuite,
**caractérisée en ce que** le dispositif de fuite (2) est selon l'une des revendications précédentes.

8. Paroi de turbomachine selon la revendication précédente, **caractérisée en ce que** le dispositif de fuite (2) est disposé de manière à ce que la surface extérieure (7) de la membrane (6) affleure la surface adjacente de la paroi, la surface adjacente de la paroi (16) étant préférentiellement garnie d'une couche de matériau abradable (14).

9. Paroi de turbomachine selon l'une des revendications 7 et 8, **caractérisée en ce que** le dispositif de fuite (2) est selon l'une des revendications 4 et 5 et est disposé de manière à ce que son axe longitudinal soit approximativement perpendiculaire à la paroi (16)

10. Paroi de turbomachine selon l'une des revendications 7 à 9, **caractérisé en ce qu'**elle comprend une série de dispositifs de fuite (2) répartis sur une ou plusieurs circonférences de la paroi (12).

11. Paroi de turbomachine selon l'une des revendications 7 à 10, **caractérisé en ce qu'**elle est une paroi statorique (12) d'un compresseur (30), délimitant l'enveloppe extérieure de la veine fluide accélérée par une rangée d'aubes rotoriques du compresseur, le ou les dispositifs de fuite (2) étant disposés en face des extrémités de la rangée d'aubes rotoriques (25).

12. Paroi de turbomachine axiale selon l'une des revendications 7 à 10, **caractérisé en ce qu'**elle est une virole interne d'une rangée d'aubes statoriques (28) d'un compresseur (30) formant un étage redresseur.

13. Compresseur multi-étages (30) de turbomachine double flux (38), comprenant une première paroi (12) délimitant l'enveloppe extérieure de la veine fluide du flux primaire traversant le compresseur (30) et une seconde paroi (18) délimitant l'enveloppe intérieure de la veine fluide du flux secondaire et formant avec la première paroi un bec de séparation (20) des flux primaire et secondaire et, le bec de séparation (20) étant équipé d'au moins un dispositif de fuite (2) pour la première paroi (12), la fuite étant destinée à limiter et/ou arrêter un phénomène de pompage,
**caractérisé en ce que**
la première paroi (12) est selon l'une des revendications 7 à 11 comprenant plusieurs dispositifs de fuite (2) disposés au niveau de plusieurs étages de compression (25), le bec de séparation (20) formant une chambre de communication (19) des dispositifs de fuite (2) disposés sur la première paroi (12).

14. Compresseur selon la revendication précédente, **caractérisé en ce que** la seconde paroi (18) est équipée d'au moins un insert (2) selon l'une des revendications 1 à 6, de manière à compenser la pression régnant dans la chambre de communication (19) des dispositifs de fuite (2) disposés sur la première paroi (12).

15. Procédé de diminution et de suppression d'un phénomène de pompage dans un compresseur axial (30) de turbomachine à double flux (38) avec une première paroi (12) délimitant l'enveloppe extérieure de la veine fluide du flux primaire traversant le compresseur (30) et une seconde paroi (18) délimitant l'enveloppe intérieure de la veine fluide du flux secondaire et formant avec la première paroi (12) un bec de séparation (20) des flux primaire et secondaire, le procédé comprenant l'étape consistant à disposer au moins un dispositif de fuite au niveau de la première paroi,
**caractérisé en ce que** le ou les dispositifs de fuite (2) sont selon l'une des revendications 1 à 6 ; et par le fait de prévoir au moins un dispositif de fuite (2) selon l'une des revendications 1 à 6 au travers de la seconde paroi (18) de manière à utiliser le bec de séparation (20) comme chambre de communication et de compensation (19) pour les dispositifs de fuite (2) de la première paroi (12).

## Patentansprüche

1. Vorrichtung für eine Leckage zu einem Leckagekanal für eine Wand (12), die einen in Bewegung befindlichen Fluidstrom in einer Strömungsmaschine begrenzt, umfassend einen Einsatz (2), der dazu eingerichtet ist, durch die Wand (12) angeordnet zu werden, wobei der Einsatz eine Membran (6) umfasst;
**dadurch gekennzeichnet, dass**
der Einsatz (2) hohl ist, die Außenfläche (7) der Membran (6) den Fluidstrom begrenzt und die Innenfläche (5) der Membran (6) mit dem Leckagekanal in Verbindung steht, wobei die Membran (6) mindestens eine Kerbe (10) umfasst; wobei die Membran (6) aus einem solchen Material hergestellt ist und eine solche Geometrie aufweist, dass sie dazu eingerichtet ist, sich in der Nähe der Kerbe (10) bei Vorliegen eines Druckunterschieds zwischen ihrer Außenfläche (7) und Innenfläche (5) zu verformen.

2. Leckagevorrichtung nach dem vorgenannten Anspruch, **dadurch gekennzeichnet, dass** die Membran (6) aus dem gleichen Material wie der Einsatz (2) besteht und einstückig mit dem Einsatz (2) ist.

3. Leckagevorrichtung nach einem der vorgenannten Ansprüche, **dadurch gekennzeichnet, dass** die Membran zwei kreuzförmig angeordnete Kerben (10) umfasst, wobei die zwei Kerben bevorzugt senkrecht sind.

4. Leckagevorrichtung nach einem der vorgenannten Ansprüche, **dadurch gekennzeichnet, dass** der Einsatz (2) generell zylindrisch mit einer Längsachse ist und die Membran (6) an einem Ende des zylindrischen Teils (4) angeordnet ist, generell senkrecht zu seiner Längsachse und in Bezug auf den zylindrischen Teil (4) auf leckdichte Weise.

5. Leckagevorrichtung nach dem vorgenannten Anspruch, **dadurch gekennzeichnet, dass** der Einsatz (2) einen Flansch (8) an dem Ende seines zylindrischen Teils (4) umfasst, das entgegengesetzt zu dem die Membran (6) umfassenden Ende ist.

6. Leckagevorrichtung nach einem der vorgenannten Ansprüche, **dadurch gekennzeichnet, dass** das Material der Membran (6) eine Formgedächtnislegierung oder ein Polymer ist.

7. Wand (12) einer Strömungsmaschine, welche einen in Bewegung befindlichen Fluidstrom begrenzt, ausgerüstet mit mindestens einer Vorrichtung für eine Leckage zu einem Leckagekanal,
**dadurch gekennzeichnet, dass** die Leckagevorrichtung (2) nach einem der vorgenannten Ansprüche ausgeführt ist.

8. Strömungsmaschinenwand nach dem vorgenannten Anspruch, **dadurch gekennzeichnet, dass** die Leckagevorrichtung (2) so angeordnet ist, dass die Außenfläche (7) der Membran (6) bündig mit der benachbarten Oberfläche der Wand ist, wobei die benachbarte Oberfläche der Wand (16) bevorzugt mit einer Schicht aus Einlaufmaterial (14) versehen ist.

9. Strömungsmaschinenwand nach einem der Ansprüche 7 und 8, **dadurch gekennzeichnet, dass** die Leckagevorrichtung (2) nach einem der Ansprüche 4 und 5 ausgeführt ist und so angeordnet ist, dass ihre Längsachse annähernd senkrecht zu der Wand (16) verläuft.

10. Strömungsmaschinenwand nach einem der Ansprüche 7 bis 9, **dadurch gekennzeichnet, dass** sie eine über einen oder mehrere Umfänge der Wand (12) verteilte Serie von Leckagevorrichtungen (2) umfasst.

11. Strömungsmaschinenwand nach einem der Ansprüche 7 bis 10, **dadurch gekennzeichnet, dass** sie eine Statorwand (12) eines Verdichters (30) ist, die den äußeren Mantel des von einer Reihe von Rotorblättern des Verdichters beschleunigten Fluidstroms begrenzt, wobei die Leckagevorrichtung oder -vorrichtungen (2) so angeordnet sind, dass sie den Enden der Reihe von Rotorblättern (25) zugewandt sind.

12. Axialströmungsmaschinenwand nach einem der Ansprüche 7 bis 10, **dadurch gekennzeichnet, dass** sie ein Innenzylinder einer Reihe von Statorblättern (28) eines Verdichters (30), die einen Leitapparat bildet, ist.

13. Mehrstufenverdichter (30) einer Zweistrom-Strömungsmaschine (38), umfassend eine erste Wand (12), die den äußeren Mantel des Fluidstroms des Primärstroms, der den Verdichter (30) durchläuft, begrenzt, und eine zweite Wand (18), die den inneren Mantel des Fluidstroms des Sekundärstroms begrenzt und mit der ersten Wand einen Schnabel (20) zum Trennen des Primärstroms und des Sekundärstroms bildet, und wobei der Trennschnabel (20) mit mindestens einer Leckagevorrichtung (2) für die erste Wand (12) versehen ist, wobei die Leckage dazu eingerichtet ist, ein Pumpphänomen zu begrenzen und/oder zu stoppen,
**dadurch gekennzeichnet, dass**
die erste Wand (12) nach einem der Ansprüche 7 bis 11 ausgeführt ist, umfassend mehrere Leckagevorrichtungen (2), die im Gebiet mehrerer Verdichtungsstufen (25) angeordnet sind, wobei der Trennschnabel (20) eine Verbindungskammer (19) der an der ersten Wand (12) angeordneten Leckagevorrichtungen (2) bildet.

14. Verdichter nach dem vorgenannten Anspruch, **dadurch gekennzeichnet, dass** die zweite Wand (18) mit mindestens einem Einsatz (2) nach einem der Ansprüche 1 bis 6 versehen ist, um den in der Verbindungskammer (19) der an der ersten Wand (12) angeordneten Leckagevorrichtungen (2) vorliegenden Druck auszugleichen.

15. Verfahren zur Verringerung und Unterdrückung eines Pumpphänomens in einem Axialverdichter (30) einer Zweistrom-Strömungsmaschine (38), mit einer ersten Wand (12), die den äußeren Mantel des Fluidstroms des Primärstroms, der den Verdichter (30) durchläuft, begrenzt, und einer zweiten Wand (18), die den inneren Mantel des Fluidstroms des Sekundärstroms begrenzt und mit der ersten Wand (12) einen Schnabel (20) zum Trennen des Primärstroms und des Sekundärstroms bildet; wobei das Verfahren den Schritt umfasst, der daraus besteht, mindestens eine Leckagevorrichtung im Gebiet der ersten Wand anzuordnen,
**dadurch gekennzeichnet, dass** die Leckagevorrichtung oder -vorrichtungen (2) nach einem der Ansprüche 1 bis 6 ausgeführt sind, und durch die Tatsache, dass mindestens eine Leckage (2) nach einem der Ansprüche 1 bis 6 durch die zweite Wand (18) vorgesehen ist, um den Trennschnabel (20) als Verbindungs- und Ausgleichskammer (19) für die Leckagevorrichtungen (2) der ersten Wand (12) zu nutzen.

## Claims

1. Device for a leakage toward a leakage channel for a wall (12) delimiting a fluid stream in motion in a turbo machine, comprising an insert (2) adapted to be arranged through the wall (12), the insert comprising a membrane (6);
**characterized in that**
the insert (2) is hollow, the outer surface (7) of the membrane (6) defines the fluid stream and the inner surface (5) of the membrane (6) is in communication with the leakage channel, the membrane (6) comprising at least one notch (10); the membrane (6) being made of a material and having a geometry such that it is adapted to deform in the vicinity of the notch (10) in the presence of a pressure difference between its outer (7) and inner (5) surfaces.

2. Leakage device according to the previous claim, **characterized in that** the membrane (6) is made of the same material as the insert (2) and is unitary with the insert (2).

3. Leakage device according to one of the previous claims, **characterized in that** the membrane comprises two cross-shaped notches (10), the two notches preferably being perpendicular.

4. Leakage device according to one of the previous claims, **characterized in that** the insert (2) is generally cylindrical with a longitudinal axis and the membrane (6) is arranged at one end of the cylindrical portion (4), generally perpendicular to its longitudinal axis and in a leakproof manner with respect to the cylindrical portion (4).

5. Leakage device according to the previous claim, **characterized in that** the insert (2) comprises a flange (8) at the end of its cylindrical part (4) which is opposite to that comprising the membrane (6).

6. Leakage device according to one of the previous claims, **characterized in that** the material of the membrane (6) is a shape memory alloy or a polymer.

7. Wall (12) of a turbomachine delimiting a fluid stream in motion, equipped with at least one device for a leakage toward a leakage channel,
**characterized in that** the leakage device (2) is according to one of the previous claims.

8. Turbomachine wall according to the previous claim, **characterized in that** the leakage device (2) is arranged so that the outer surface (7) of the membrane (6) is flush with the adjacent surface of the wall, the adjacent surface of the wall (16) preferably being provided with a layer of abradable material (14).

9. Turbo machine wall according to one of claims 7 and 8, **characterized in that** the leakage device (2) is according to one of claims 4 and 5 and is arranged so that its longitudinal axis is approximately perpendicular to the wall (16).

10. Turbo machine wall according to one of claims 7 to 9, **characterized in that** it comprises a series of leakage devices (2) distributed over one or several circumferences of the wall (12).

11. Turbo machine wall according to one of claims 7 to 10, **characterized in that** it is a stator wall (12) of a compressor (30) delimiting the outer envelope of the fluid stream accelerated by a row of rotor blades of the compressor, the leakage device or devices (2) being arranged facing the ends of the row of rotor blades (25).

12. Axial turbo machine wall according to one of claims 7 to 10, **characterized in that** it is an inner cylinder of a row of stator blades (28) of a compressor (30) forming a rectifier stage.

13. Multi-stage compressor (30) of a double-flow turbo machine (38), comprising a first wall (12) delimiting the outer envelope of the fluid stream of the primary flow going through the compressor (30) and a second wall (18) delimiting the inner envelope of the fluid stream of the secondary flow and forming with the first wall a beak (20) for separating the primary and secondary flows, and the separation beak (20) being provided with at least one leakage device (2) for the first wall (12), the leakage being adapted to limit and/or stop a surging phenomenon,
**characterized in that**
the first wall (12) is according to one of claims 7 to 11 comprising several leakage devices (2) arranged in the area of several compression stages (25), the separation beak (20) forming a communication chamber (19) of the leakage devices (2) arranged on the first wall (12).

14. Compressor according to the previous claim, **characterized in that** the second wall (18) is provided with at least one insert (2) according to one of claims 1 to 6 so as to compensate the pressure present in the communication chamber (19) of the leakage devices (2) arranged on the first wall (12).

15. Process of diminishing and suppressing a surging phenomenon in an axial compressor (30) of a double-flow turbo machine (38) with a first wall (12) delimiting the outer envelope of the fluid stream of the primary flow going through the compressor (30) and a second wall (18) delimiting the inner envelope of the fluid stream of the secondary flow and forming with the first wall (12) a beak (20) for separating the primary and secondary flows; the process comprising the step consisting in arranging at least one leakage device in the area of the first wall,
**characterized in that** the leakage device or devices (2) are according to one of claims 1 to 6, and in the fact that at least one leakage (2) is provided according to one of claims 1 to 6 through the second wall (18) so as to use the separation beak (20) as a communication and compensation chamber (19) for the leakage devices (2) of the first wall (12).
